# EUROPEAN PATENT APPLICATION

(11) **EP 4 707 031 A1**
(43) Date of publication of application: **11.03.2026**
(21) Application number: 25193176.2
(22) Date of filing: 31.07.2025
(51) Int. Cl.: B60L 3/00, B60L 3/12, B60L 50/64, B60L 58/10, B60L 58/21, B60L 58/24, H01M 10/42, H01M 10/48

(54) **BATTERY SYSTEM, ABNORMALITY DETERMINATION SYSTEM, VEHICLE, ABNORMALITY DETERMINATION METHOD, AND SERVER**

(30) Priority: 26.08.2024 JP 2024144330; 23.04.2025 JP 2025071427
(71) Applicant: TOYOTA JIDOSHA KABUSHIKI KAISHA, Toyota-shi, Aichi-ken 471-8571 (JP)
(72) Inventor: SASAKI, Manabu, Aichi-ken, 471-8571 (JP); KURODA, Yasuhiro, Aichi-ken, 471-8571 (JP); FUTAMI, Issei, Aichi-ken, 471-8571 (JP); ANDO, Takashi, Aichi-ken, 471-8571 (JP); YOSHIDA, Hiroshi, Aichi-ken, 471-8571 (JP); YOSHIDA, Katsumasa, Aichi-ken, 471-8571 (JP); ITO, Shuta, Aichi-ken, 471-8571 (JP); KAMESAKI, Daisuke, Aichi-ken, 471-8571 (JP); YOKOYAMA, Daiki, Aichi-ken, 471-8571 (JP)
(74) Representative: D Young & Co LLP

(57) **Abstract**

A battery system includes: a battery stack (150); a housing (101) that houses the battery stack (150) and that is installed in a vehicle; a first thermistor (102 to 112) that detects a first temperature of the housing (101); a second thermistor (114 to 120) that detects a second temperature in the housing (101); and a battery ECU (304) that compares a result of detection by the first thermistor (102 to 112) with a result of detection by the second thermistor (114 to 120) to determine whether a temperature increase in the battery stack is due to a change in an external environment of a battery pack (100) or due to a malfunction in a battery cell.

## Description

### CROSS REFERENCE TO RELATED APPLICATIONS

This nonprovisional application is based on Japanese Patent Application No. 2024-144330 filed on August 26, 2024 and Japanese Patent Application No. 2025-071427 filed on April 23, 2025, with the Japan Patent Office, the entire contents of which are hereby incorporated by reference.

### BACKGROUND

### Field

The present disclosure relates to a battery system.

### Description of the Background Art

Techniques are known for detecting the temperature of each cell in a battery pack including a plurality of battery cells. For example, Japanese Patent Laying-Open No. 2008-198515 discloses a technique for detecting the temperatures of a plurality of battery cells by moving a thermistor by use of a servo mechanism.

### SUMMARY

When an abnormal temperature increase is detected in a battery pack configured as described above, it is required to determine with high accuracy whether the abnormal temperature increase is due to a malfunction in the battery pack or due to a change in an external environment of the battery pack.

An object of the present disclosure is to provide a battery system, an abnormality determination system, a vehicle, an abnormality determination method, and a server capable of determining a cause of a temperature increase with high accuracy.

A battery system according to an aspect of the present disclosure includes: a battery cell; a housing that houses the battery cell and that is mounted on a vehicle; a first detection device that detects a first temperature indicating a temperature of the housing; a second detection device that detects a second temperature indicating a temperature in the housing; and a first control device that compares a result of detection by the first detection device with a result of detection by the second detection device to determine whether a temperature increase in the battery cell is due to a change in an external environment of the housing or due to a malfunction in the battery cell.

Thus, it is possible to use the result of detection by the first detection device and the result of detection by the second detection device to distinguish whether the temperature increase in the battery cell is due to a change in the external environment or due to a malfunction in the battery cell, to thereby determine the cause of the abnormal temperature increase with high accuracy.

In an embodiment, when a first rate of increase in the first temperature is higher than a second rate of increase in the second temperature, the first control device determines that the temperature increase is due to a change in the external environment, and when the second rate of increase is higher than the first rate of increase, the first control device determines that the temperature increase is due to a malfunction in the battery cell.

Thus, it is possible to distinguish with high accuracy whether the temperature increase in the battery cell is due to a change in the external environment or due to a malfunction in the battery cell.

In a further embodiment, the battery system further includes a second control device capable of communicating with a server external to the vehicle. The first control device activates the second control device to transmit, to the server, information from which a result of determination can be acquired.

Thus, since the information from which the result of determination can be acquired can be saved on the server, the result of determination of the cause of the temperature increase can be acquired on the server side.

In a further embodiment, the first detection device is provided at a position other than on a path along which gas is discharged out of the housing from the battery cell upon generation of the gas in the battery cell.

Thus, when gas is generated in the battery cell, the effect of the generated gas on the detection of the first temperature by use of the first detection device is suppressed.

In a further embodiment, a plurality of battery cells are housed in the housing. An insulating plate that provides insulation between the battery cells is provided between the battery cells. The first detection device is provided in a lower portion of the insulating plate.

Thus, since the first detection device is provided in the lower portion of the insulating plate, the first detection device can be readily assembled to the battery cell.

An abnormality determination system according to another aspect of the present disclosure includes: a battery pack; a first detection device that detects a first parameter correlated with an internal temperature of the battery pack; a second detection device that detects a second parameter less correlated with the internal temperature than the first parameter and correlated with an external temperature of the battery pack; and a control device that determines whether an abnormality has occurred inside or outside the battery pack using the first parameter and the second parameter.

Thus, it is possible to determine with high accuracy whether the abnormality has occurred inside or outside the battery pack by using the first parameter and the second parameter.

In an embodiment, when a predetermined change occurs in the second parameter before in the first parameter, the control device determines that the abnormality has occurred outside the battery pack.

Thus, since the change occurs in the second parameter before in the first parameter when the abnormality occurs outside the battery pack, it is possible to determine with high accuracy that the abnormality has occurred outside the battery pack.

In a further embodiment, when a predetermined change occurs in the first parameter before in the second parameter, the control device determines that the abnormality has occurred inside the battery pack.

Thus, since the change occurs in the first parameter before in the second parameter when the abnormality occurs inside the battery pack, it is possible to determine with high accuracy that the abnormality has occurred inside the battery pack.

In a further embodiment, the predetermined change includes a change greater than or equal to a predetermined value in a predetermined time period.

Thus, it is possible to determine with high accuracy whether the abnormality has occurred inside or outside the battery pack, based on the presence or absence of the predetermined change in the first parameter or the second parameter.

In a further embodiment, the second detection device includes a plurality of detection targets. When a predetermined change occurs in at least one detection target of the plurality of detection targets before in the other detection targets, the control device identifies a location of the abnormality outside the battery pack using a position corresponding to the at least one detection target.

Thus, it is possible to identify with high accuracy the position where the abnormality has occurred outside the vehicle.

In a further embodiment, the first detection device and the second detection device are mounted on a vehicle. The control device is provided in a server capable of communicating with the vehicle. The first detection device detects the internal temperature as the first parameter. The second detection device detects an outside air temperature as the second parameter. When an abnormality occurs in the vehicle, the vehicle transmits information about the first parameter and the second parameter to the server.

Thus, it is possible to determine with high accuracy whether the abnormality has occurred inside or outside the battery pack.

In a further embodiment, the first detection device and the second detection device are mounted on a vehicle. The control device is provided in a server capable of communicating with the vehicle. The first detection device detects the internal temperature as the first parameter. The second detection device detects a pressure in a tire of the vehicle as the second parameter. When an abnormality occurs in the vehicle, the vehicle transmits information about the first parameter and the second parameter to the server.

Thus, it is possible to determine with high accuracy whether the abnormality has occurred inside or outside the battery pack.

An abnormality determination system according to another aspect of the present disclosure determines whether an abnormality has occurred inside or outside a battery pack using a first parameter correlated with an internal temperature of the battery pack, and a second parameter less correlated with the internal temperature than the first parameter and correlated with an external temperature of the battery pack.

A vehicle according to another aspect of the present disclosure includes: a battery pack; an acquisition device that acquires an internal temperature and an external temperature of the battery pack; and a control device that transmits, to a server, information including a first parameter correlated with the internal temperature, and a second parameter less correlated with the internal temperature than the first parameter and correlated with the external temperature.

An abnormality determination method according to another aspect of the present disclosure is an abnormality determination method for determining an abnormality in a battery pack. The abnormality determination method includes: detecting a first parameter correlated with an internal temperature of the battery pack; detecting a second parameter less correlated with the internal temperature than the first parameter and correlated with an external temperature of the battery pack; and determining whether an abnormality has occurred inside or outside the battery pack using the first parameter and the second parameter.

A server according to another aspect of the present disclosure includes: an acquisition device that acquires, from a vehicle having a battery pack mounted thereon, information including a first parameter correlated with an internal temperature of the battery pack, and a second parameter less correlated with the internal temperature than the first parameter and correlated with an external temperature of the battery pack; and a control device that determines whether an abnormality has occurred inside the battery pack or outside the vehicle using the acquired first parameter and the acquired second parameter.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing an example of a configuration of a battery system according to a first embodiment.
Fig. 2 shows an example of a configuration of a control device and a process executed by the control device.
Fig. 3 shows another example of a configuration of the control device and a process executed by the control device.
Fig. 4 shows yet another example of a configuration of the control device and a process executed by the control device.
Fig. 5 is a flowchart illustrating an example of a process of determining a cause.
Fig. 6 shows still yet another example of a configuration of the control device and a process executed by the control device.
Fig. 7 is a diagram showing an example of a configuration of an abnormality determination system according to a second embodiment.
Fig. 8 is a flowchart illustrating an example of a process executed by each of a vehicle and a server in the second embodiment.
Fig. 9 is a diagram showing an example of histories of results of detection by a battery temperature sensor and an outside air temperature sensor.
Fig. 10 is a diagram showing another example of histories of results of detection by the battery temperature sensor and the outside air temperature sensor.
Fig. 11 is a diagram for illustrating operation of the abnormality determination system according to the second embodiment.
Fig. 12 is a diagram showing an example of a configuration of an abnormality determination system according to a third embodiment.
Fig. 13 is a flowchart illustrating an example of a process executed by each of a vehicle and a server in the third embodiment.
Fig. 14 is a diagram showing an example of histories of results of detection by a battery temperature sensor and tire pressure sensors.
Fig. 15 is a diagram showing another example of histories of results of detection by the battery temperature sensor and the tire pressure sensors.

### DESCRIPTION OF THE PREFERRED EMBODIMENTS

Embodiments of the present disclosure will be hereinafter described in detail with reference to the drawings. In the drawings, the same or corresponding parts are denoted by the same reference characters, and description thereof will not be repeated.

### <First Embodiment>

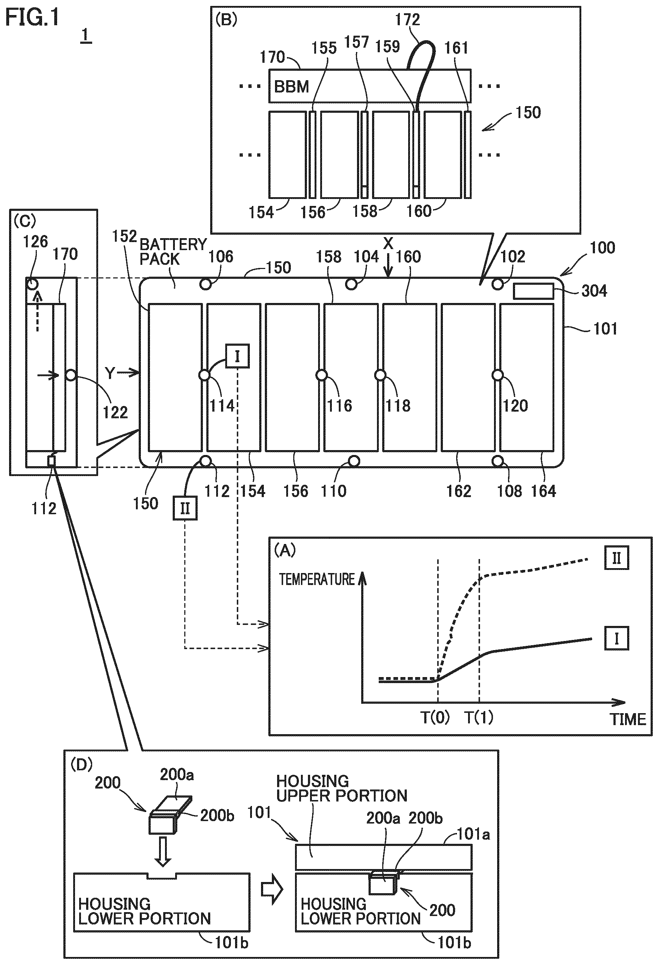

Fig. 1 is a diagram showing an example of a configuration of a battery system 1 according to a first embodiment. Battery system 1 includes a battery pack 100. Battery pack 100 is mounted, for example, on an electrically powered vehicle such as a battery electric vehicle or a hybrid electric vehicle. Battery pack 100 includes a housing 101, a battery stack 150, and a battery electronic control unit (ECU) 304. Battery stack 150 includes a plurality of battery cells 152, 154, 156, 158, 160, 162 and 164 (hereinafter referred to as a "plurality of battery cells 152 to 164"). Battery stack 150 is formed by arranging the plurality of battery cells, each of which has a larger area surface facing an adjacent battery cell. Battery stack 150 is housed in housing 101. Housing 101 is provided with a plurality of thermistors 102, 104, 106, 108, 110 and 112 (hereinafter referred to as "thermistors 102 to 112"). The plurality of thermistors 102 to 112 correspond to a "first detection device" that detects a temperature of housing 101. The plurality of thermistors 102 to 112 are each configured to be capable of detecting a temperature at a position where the thermistor is provided (hereinafter sometimes referred to as a "first temperature"). The positions where the plurality of thermistors 102 to 112 are provided are not particularly limited to those shown in Fig. 1, as long as the thermistors can detect the temperature of housing 101. The plurality of battery cells 152 to 164 are provided with a plurality of thermistors 114, 116, 118 and 120 (hereinafter referred to as "thermistors 114 to 120"). Specifically, thermistors 114 to 120 are provided between battery cells 152 and 154, between battery cells 156 and 158, between battery cells 158 and 160, and between battery cells 162 and 164, respectively. The plurality of thermistors 114 to 120 correspond to a "second detection device" that detects a temperature in housing 101. The plurality of thermistors 114 to 120 are each configured to be capable of detecting a temperature at a position where the thermistor is provided (hereinafter sometimes referred to as a "second temperature"). The positions where the plurality of thermistors 114 to 120 are provided are not particularly limited to those shown in Fig. 1, as long as the thermistors can detect the temperature in housing 101.

Each of thermistors 102 to 112 and thermistors 114 to 120 is a temperature sensor that detects temperature through changes in resistance value. The temperature sensor is not limited to a thermistor. Thermistors 102 to 112 and thermistors 114 to 120 are connected, for example, to battery ECU 304. Battery ECU 304 includes a central processing unit (CPU) and a memory that are not shown, and performs predetermined operation by executing a program and the like stored in the memory. Battery ECU 304 uses thermistors 102 to 112 and thermistors 114 to 120 to acquire information about the temperature at the position where each thermistor is provided.

For example, battery ECU 304 can determine, using results of detection by thermistors 102 to 112 and thermistors 114 to 120, a temperature abnormality in battery pack 100 when the temperature of battery pack 100 is within an abnormal temperature range (e.g., a high temperature range).

When an abnormal temperature increase is detected in battery pack 100, however, it is required to determine with high accuracy whether the abnormal temperature increase is due to a malfunction in any one of the battery cells of battery pack 100 or due to a change in an external environment of battery pack 100.

In the present embodiment, therefore, battery ECU 304 compares the results of detection by thermistors 102 to 112 with the results of detection by thermistors 114 to 120 to determine whether the temperature increase in battery pack 100 is due to a change in the external environment or due to a battery malfunction.

More specifically, when a first rate of increase in the first temperature detected by any one of thermistors 102 to 112 is higher than a second rate of increase in the second temperature detected by any one of thermistors 114 to 120, battery ECU 304 determines that the temperature increase is due to a change in the external environment, and when the second rate of increase is higher than the first rate of increase, battery ECU 304 determines that the temperature increase is due to a battery malfunction.

Thus, it is possible to use the results of detection by thermistors 102 to 112 and the results of detection by thermistors 114 to 120 to distinguish whether the temperature increase in battery pack 100 is due to a change in the external environment or due to a battery malfunction. It is thus possible to determine the cause of the abnormal temperature increase with high accuracy.

Battery ECU 304 calculates, for example, rates of increase in the temperatures detected by thermistors 102 to 112 and thermistors 114 to 120. Battery ECU 304 calculates, for example, an amount of change in temperature per unit time (hereinafter simply referred to as a "rate of increase"). When a predetermined condition is satisfied, battery ECU 304 compares a maximum value (1) of the rates of increase in the temperatures in thermistors 102 to 112 with a maximum value (2) of the rates of increase in the temperatures in thermistors 114 to 120. The predetermined condition may include, for example, a condition that at least one of thermistors 102 to 112 and thermistors 114 to 120, an average value, or a maximum value exceeds a threshold value, or a condition that a detection value of a cell temperature sensor (not shown) that detects the temperature of any one of the plurality of battery cells 152 to 164 exceeds a threshold value. The predetermined condition may be a condition for calculating the rate of increase.

For example, when the maximum value (1) is greater than the maximum value (2) and a magnitude of the difference between them is greater than a threshold value, battery ECU 304 determines that the temperature increase in battery pack 100 is due to a change in the external environment.

For example, when the maximum value (2) is greater than the maximum value (1) and a magnitude of the difference between them is greater than the threshold value, on the other hand, battery ECU 304 determines that the temperature increase in battery pack 100 is due to a battery malfunction.

Fig. 1 (A) shows an example of changes in the temperatures detected by thermistors 112 and 114. In Fig. 1 (A), the vertical axis represents temperature and the horizontal axis represents time. In Fig. 1 (A), a solid line (I) represents a temporal change in the temperature detected by thermistor 114, and a broken line (II) represents a temporal change in the temperature detected by thermistor 112.

Let us assume that the temperature of battery pack 100 rapidly increases between time T(0) and time T(1), followed by a gradual change in the rate of increase. At this time, battery ECU 304 calculates the rate of increase using the result of detection by each thermistor each time a result of detection is acquired. Battery ECU 304 calculates the rate of increase in each thermistor, and determines the maximum value (1) and the maximum value (2). In Fig. 1 (A), for example, a rate of increase calculated using the result of detection by thermistor 112 of thermistors 102 to 112 is determined as the maximum value (1), and a rate of increase calculated using the result of detection by thermistor 114 of thermistors 114 to 120 is determined as the maximum value (2). For example, when the maximum value (1) is greater than the maximum value (2) and a magnitude of the difference between the maximum value (1) and the maximum value (2) is greater than a threshold value in a time period from time T(0) to time T(1), battery ECU 304 determines that the temperature increase in the battery pack is due to a change in the external environment.

The present embodiment has described determining the cause of the temperature increase using the maximum value (1) and the maximum value (2), however, the cause of the temperature increase may be determined using a result of comparison (which is higher, and a magnitude of the difference) between an average value (1) of the rates of increase in the temperatures detected by thermistors 102 to 112 and an average value (2) of the rates of increase in the temperatures detected by thermistors 114 to 120. Further, when battery ECU 304 determines that the temperature increase is due to a battery malfunction, battery ECU 304 may identify a malfunctioning battery cell (e.g., a battery cell having a maximum temperature) using the results of detection by thermistors 114 to 120.

Thermistors 102 to 112 may be provided on insulating plates between the battery cells instead of at the positions shown in Fig. 1. FIG. 1 (B) shows an example of a cross-sectional view of battery pack 100 as seen in the direction of an arrow X. As shown in FIG. 1 (B), an insulating plate 155 is provided between battery cells 154 and 156. An insulating plate 157 is provided between battery cells 156 and 158. An insulating plate 159 is provided between battery cells 158 and 160. An insulating plate 161 is provided between battery cells 160 and 162.

A busbar module (hereinafter referred to as BBM) 170 is provided above battery stack 150. BBM 170 can connect the plurality of battery cells 152 to 164 in series by connecting the positive electrode terminals and the negative electrode terminals of the plurality of battery cells 152 to 164 in a predetermined combination.

In the present embodiment, the temperature sensor such as a thermistor that detects the temperature of housing 101 may be provided in a lower portion (hatched region) of the insulating plate. In this case, BBM 170 is provided with a circuit that connects the thermistor to battery ECU 304 in addition to a connection member that connects the terminals. In this way, each thermistor provided on the insulating plate is connected to BBM 170 through a harness 172, for example, thereby being able to transmit a temperature detection signal to battery ECU 304.

Further, thermistors 102 to 112 and thermistors 114 to 120 are provided at positions other than on a path along which gas generated from any one of battery cells 152 to 164 flows out of battery pack 100. Fig. 1 (C) shows a view of battery pack 100 as seen in the direction of an arrow Y. As shown in Fig. 1 (C), BBM 170 is provided above battery stack 150. For example, in the case where gas is generated from any one of the plurality of battery cells 152 to 164 in housing 101 of battery pack 100, when the gas flows out and is discharged out of battery pack 100 along a path indicated by a solid line arrow, the thermistors are positioned so as to be not disposed at a position 122 on the path. Alternatively, when the gas flows out and is discharged out of battery pack 100 along a path indicated by a broken line arrow, the thermistors are positioned so as to be not disposed at a position 126 on the path.

Further, thermistors 102 to 112 may be assembled and fixed so as to be sandwiched between an upper portion and a lower portion of housing 101. Fig. 1 (D) shows an example of fixing a heat collecting plate 200 to housing 101. Heat collecting plate 200 includes a plate-like member 200a and a seal member 200b. A thermistor that detects the temperature of housing 101 is attached to plate-like member 200a. A portion bent downward at a right angle is formed in the middle of plate-like member 200a. In a horizontal portion other than the portion bent at the right angle, seal member 200b is provided to surround plate-like member 200a in a width direction. Housing 101 includes an upper portion 101a and a lower portion 101b. Battery stack 150 is fixed to a bottom surface of lower portion 101b. Upper portion 101a is assembled to close an opening in lower portion 101b, to house battery stack 150 in housing 101. A recess is formed in a part of a surface of lower portion 101b that mates with upper portion 101a. The horizontal portion of plate-like member 200a is attached to the recess before upper portion 101a is assembled to lower portion 101b. When upper portion 101a is assembled to lower portion 101b, a gap of the recess is filled by plate-like member 200a and seal member 200b.

As described above, in battery system 1 according to the present embodiment, it is possible to use the results of detection by thermistors 102 to 112 that detect the temperature of housing 101 and the results of detection by thermistors 114 to 120 that detect the temperature in housing 101 to distinguish whether the temperature increase in battery pack 100 is due to a change in the external environment or due to a battery malfunction. More specifically, it is possible to determine that the temperature increase is due to a change in the external environment when the first rate of increase in the first temperature of any one of thermistors 102 to 112 is higher than the second rate of increase in the second temperature of any one of thermistors 114 to 120, and determine that the temperature increase is due to a battery malfunction when the second rate of increase is higher than the first rate of increase. Therefore, there can be provided a battery system capable of determining a cause of a temperature increase with high accuracy.

Further, since thermistors 102 to 112 are provided at positions other than on the path along which gas is discharged out of housing 101 from a battery cell upon generation of the gas in the battery cell, the effect of the gas generated in the battery cell on the detection of the first temperature and the second temperature is suppressed.

Further, since thermistors 102 to 112 are provided in the lower portions of the insulating plates between the battery cells, thermistors 102 to 112 can be readily assembled to the battery stack.

Modifications are described below.

The above embodiment has described an example in which battery ECU 304 determines the cause of the temperature increase in battery pack 100, however, the results of detection by the thermistors or the result of determination of the cause of the temperature increase may be transmitted to another control device (such as another ECU or an external server).

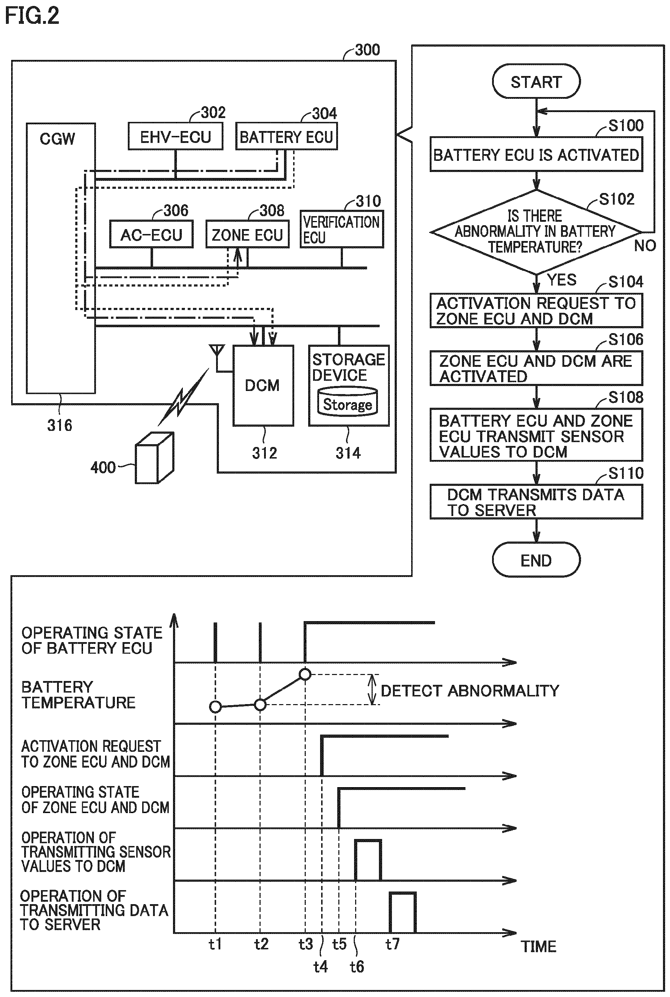

Fig. 2 is a diagram showing an example of a configuration, process, and operation of a control device 300 in a modification. As shown in Fig. 2, control device 300 further includes, in addition to battery ECU 304, an EHV-ECU 302, an AC-ECU 306, a zone ECU 308, a verification ECU 310, a data communication module (DCM) 312, a storage device 314, and a central gateway (hereinafter referred to as CGW) 316. EHV-ECU 302 comprehensively controls a vehicle system in coordination with the other ECUs. AC-ECU 306 controls an air conditioner. Zone ECU 308 controls operation of a device in a region set in advance in the vehicle (such as the front, center, or rear of the vehicle). Verification ECU 310 executes a verification process such as for locking and unlocking. DCM 312 is configured to be capable of communicating with an external server 400. Storage device 314 stores various types of information in a storage area (storage). CGW 316 relays communication between, for example, a communication network including EHV-ECU 302 and battery ECU 304, a communication network including AC-ECU 306, zone ECU 308 and verification ECU 310, and a communication network including DCM 312 and storage device 314.

Each ECU includes a processor and a memory (neither shown). When the processor executes a program stored in the memory, prescribed operation in a control target is implemented. When control device 300 executes the process shown in a flowchart of Fig. 2, the operation shown in a timing chart of Fig. 2 is performed.

In step (step is hereinafter referred to as S) 100, battery ECU 304 is activated. Battery ECU 304 is activated when, for example, a prescribed activation condition is satisfied while the vehicle system is in a stop state. The prescribed activation condition includes a condition that a predetermined amount of time has elapsed since a time point of previous activation. In S102, battery ECU 304 determines whether or not there is an abnormality in the battery temperature. When a magnitude of the difference between a current value and a previous value of the temperature detected by the cell temperature sensor is greater than a threshold value, battery ECU 304 determines that there is an abnormality in the battery temperature. When it is determined that there is an abnormality in the battery temperature (YES in S102), the process moves to S104. When it is determined that there is no abnormality in the battery temperature (NO in S102), the process returns to S100. In S104, battery ECU 304 transmits an activation request to zone ECU 308 and DCM 312. In S106, zone ECU 308 and DCM 312 are activated in response to the activation request. In S108, battery ECU 304 and zone ECU 308 output various sensor values, which include sensor output values of thermistors 102 to 112 and thermistors 114 to 120 (hereinafter simply referred to as sensor values), to DCM 312. The various sensor values further include a temperature of each battery cell, a voltage of each battery cell (hereinafter referred to as a cell voltage), and an outside air temperature. The cell voltage is detected by a voltage sensor (not shown) provided in each of battery cells 152 to 164, and transmitted to control device 300. In the following description, the sensor values detected by thermistors 114 to 120 may be referred to as a pack atmosphere temperature, and the sensor value of the cell temperature sensor may be referred to as a cell temperature. In S110, DCM 312 transmits the received sensor values to server 400.

When such a process is executed, the magnitude of the temperature difference becomes smaller than or equal to the threshold value and battery ECU 304 is intermittently activated at time t1 and time t2, as shown in the timing chart of Fig. 2. When the magnitude of the temperature difference becomes greater than the threshold value at time t3, it is determined that there is an abnormality in the battery temperature (YES in S102). In this case, an activation request is transmitted to zone ECU 308 and DCM 312 at time t4 (S104), and zone ECU 308 and DCM 312 are activated at time t5 (S106). At time t6, battery ECU 304 and zone ECU 308 transmit sensor values to DCM 312 (S108). At time t7, DCM 312 transmits the received sensor values to server 400 (S110). Server 400 executes a prescribed analysis process using the received data. The prescribed analysis process includes, for example, a process of determining whether the temperature increase in battery pack 100 is due to a battery malfunction or due to a change in the external environment. Since the determination method is as described above, detailed description will not be repeated. Thus, server 400 can make the determination on the abnormal temperature increase in battery pack 100. An example in which server 400 determines the cause of the temperature increase has been described, however, for example, the result of determination of the cause of the temperature increase by battery ECU 304 may be transmitted, instead of or in addition to the sensor values, to server 400 via DCM 312. DCM 312 transmits, together with the received data, identification information (such as a production number) for identifying the vehicle or battery pack 100 to the server. Server 400 stores the identification information and the received data in a storage device in association with each other.

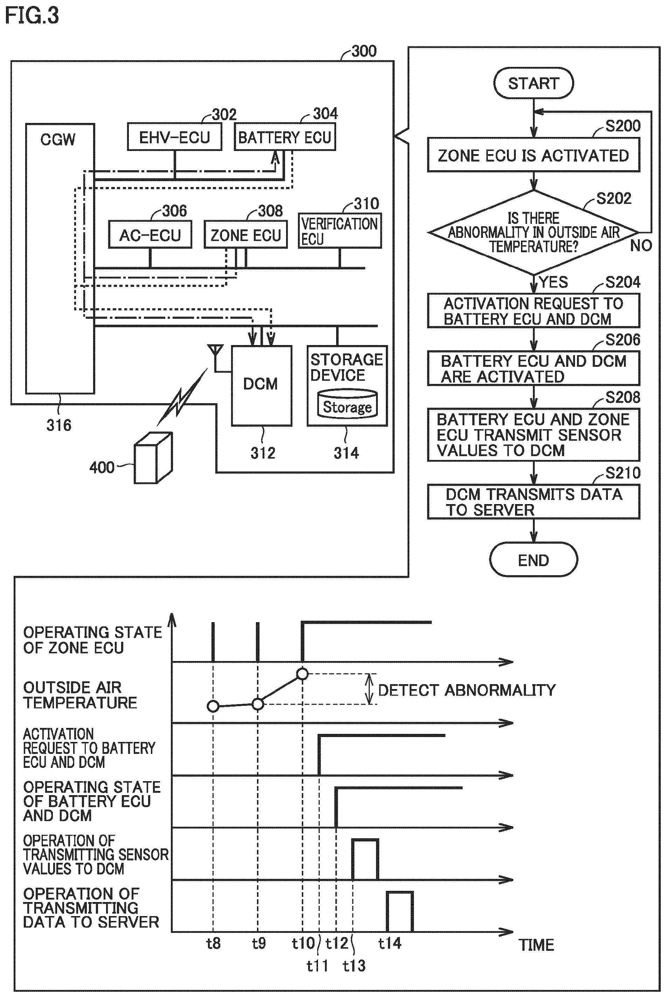

Fig. 3 is a diagram showing another example of a configuration, process, and operation of control device 300 in a modification. Control device 300 in Fig. 3 is similar to control device 300 in Fig. 2 except for operation described below, and detailed description will not be repeated. When control device 300 executes the process shown in a flowchart of Fig. 3, the operation shown in a timing chart of Fig. 3 is performed.

In S200, zone ECU 308 is activated. Zone ECU 308 is activated when a prescribed activation condition (the same condition as described above) is satisfied while the vehicle system is in a stop state. In S202, zone ECU 308 determines whether or not there is an abnormality in the outside air temperature. When a magnitude of the difference between a current value and a previous value of the outside air temperature detected by an outside air temperature sensor that is not shown is greater than a threshold value, zone ECU 308 determines that there is an abnormality in the outside air temperature. When it is determined that there is an abnormality in the outside air temperature (YES in S202), the process moves to S204. When it is determined that there is no abnormality in the outside air temperature (NO in S202), the process returns to S200. In S204, zone ECU 308 transmits an activation request to battery ECU 304 and DCM 312. In S206, battery ECU 304 and DCM 312 are activated in response to the activation request. In S208, battery ECU 304 and zone ECU 308 output various sensor values to DCM 312. In S210, DCM 312 transmits the received sensor values to server 400.

When such a process is executed, the magnitude of the difference between the current value and the previous value of the outside air temperature becomes smaller than or equal to the threshold value and zone ECU 308 is intermittently activated at time t8 and time t9, as shown in the timing chart of Fig. 3. When the magnitude of the difference becomes greater than the threshold value at time t10, it is determined that there is an abnormality in the outside air temperature (YES in S202). An activation request is transmitted to battery ECU 304 and DCM 312 at time t11 (S204), and battery ECU 304 and DCM 312 are activated at time t12 (S206). At time t13, battery ECU 304 and zone ECU 308 transmit sensor values to DCM 312 (S208). At time t14, DCM 312 transmits the received sensor values to server 400 (S210). Since the operation of server 400 is as described above, detailed description will not be repeated.

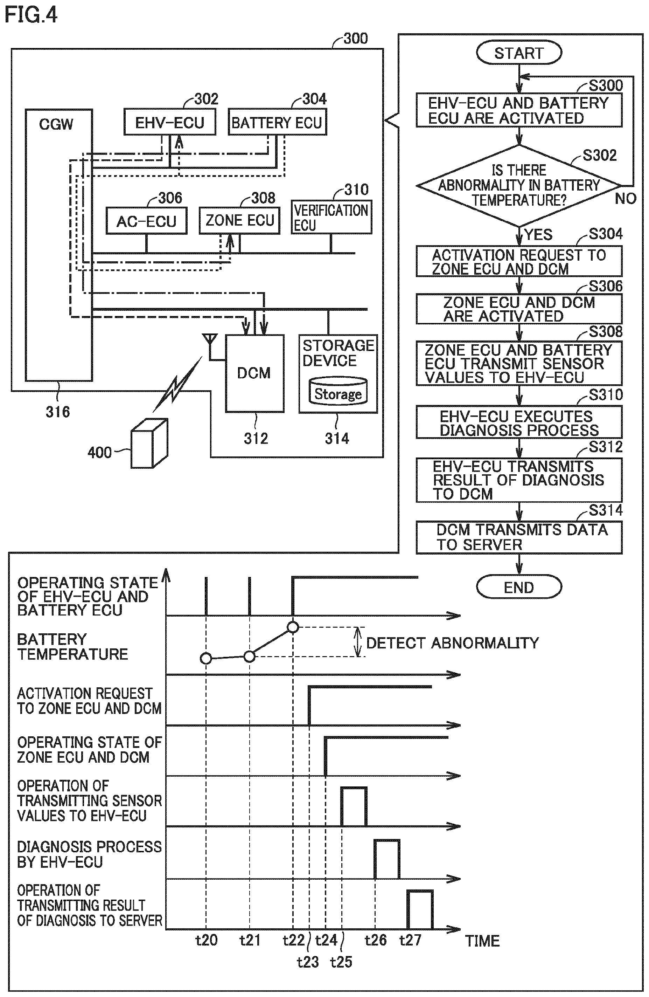

Fig. 4 is a diagram showing yet another example of a configuration, process, and operation of control device 300 in a modification. Control device 300 in Fig. 4 is similar to control device 300 in Fig. 2 except for operation described below, and detailed description will not be repeated. When control device 300 executes the process shown in a flowchart of Fig. 4, the operation shown in a timing chart of Fig. 4 is performed.

**In** S300, EHV-ECU 302 and battery ECU 304 are activated. EHV-ECU 302 and battery ECU 304 are activated when a prescribed activation condition (the same condition as described above) is satisfied while the vehicle system is in a stop state. **In** S302, EHV-ECU 302 or battery ECU 304 determines whether or not there is an abnormality in the battery temperature. The determination method is as described above, and detailed description will not be repeated. When it is determined that there is an abnormality in the battery temperature (YES in S302), the process moves to S304. When it is determined that there is no abnormality in the battery temperature (NO in S302), the process returns to S300. In S304, EHV-ECU 302 or battery ECU 304 transmits an activation request to zone ECU 308 and DCM 312. In S306, zone ECU 308 and DCM 312 are activated in response to the activation request. In S308, zone ECU 308 and battery ECU 304 transmit sensor values to EHV-ECU 302. In S310, EHV-ECU 302 executes a diagnosis process. The diagnosis process will be described later. In S312, EHV-ECU 302 transmits a result of diagnosis to DCM 312. In S314, DCM 312 transmits data on the result of diagnosis to server 400.

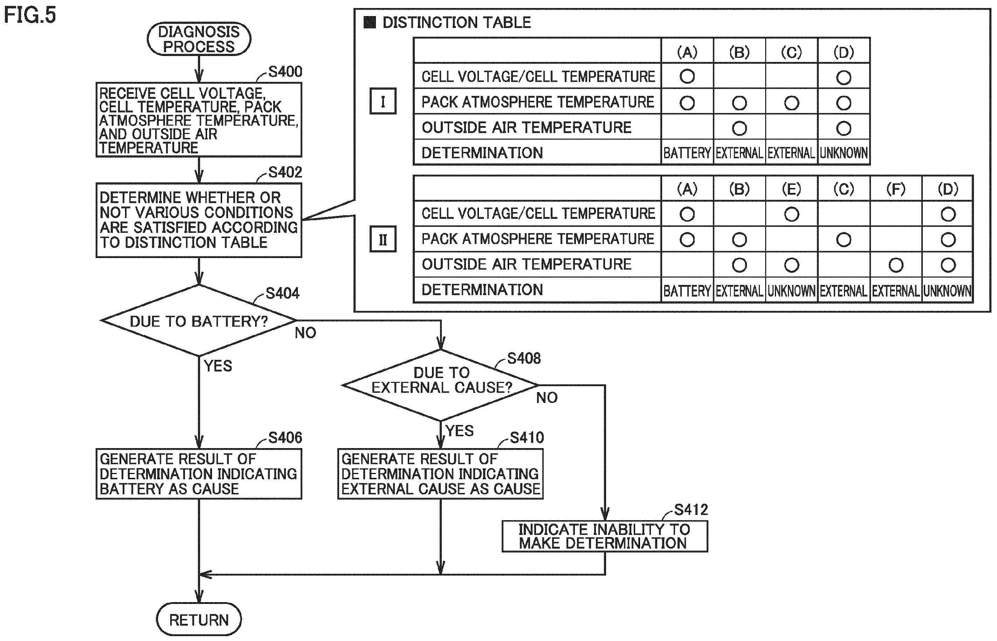

Fig. 5 is a flowchart illustrating an example of the diagnosis process. EHV-ECU 302 executes the process shown in Fig. 5 as the diagnosis process.

In S400, EHV-ECU 302 receives a cell voltage, a cell temperature, a pack atmosphere temperature, and an outside air temperature.. EHV-ECU 302 receives the above information from zone ECU 308 and battery ECU 304. In S402, EHV-ECU 302 determines whether or not various conditions are satisfied in order to distinguish, according to a distinction table, whether a temperature abnormality in battery pack 100 is due to a battery malfunction, due to a change in the external environment, or due to an unknown cause. Based on a combination of satisfied conditions, EHV-ECU 302 determines whether the temperature abnormality is due to a battery malfunction, due to a change in the external environment, or due to an unknown cause. In the process shown in Fig. 4, the cause of the temperature abnormality is determined according to a distinction table (I) in Fig. 5.

The distinction table (I) in Fig. 5 shows: whether or not a condition 1 for the cell voltage/cell temperature is satisfied; whether or not a condition 2 for the pack atmosphere temperature is satisfied; whether or not a condition 3 for the outside air temperature is satisfied; and results of determination (A) to (D) obtained from combinations of these conditions. Condition 1 includes a condition that the cell voltage or the cell temperature (the temperature detected by the cell temperature sensor) of at least one of the plurality of battery cells is greater than a threshold value. Condition 2 includes a condition that the pack atmosphere temperature (the temperature detected by at least one of thermistors 114 to 120) is greater than a threshold value. Condition 3 includes a condition that the outside air temperature is greater than a threshold value.

When condition 1 and condition 2 of the above conditions are satisfied, the result of determination (A) indicating a battery malfunction as the cause is set. When condition 2 and condition 3 are satisfied, the result of determination (B) indicating a change in the external environment as the cause is set. When only condition 2 is satisfied, the result of determination (C) indicating a change in the external environment as the cause is set. When all of condition 1, condition 2 and condition 3 are satisfied, the result of determination (D) indicating an unknown cause is set.

In S404, EHV-ECU 302 determines whether the temperature increase in battery pack 100 is due to a battery malfunction. When it is determined that the temperature increase is due to a battery malfunction (YES in S404), the process moves to S406. In S406, EHV-ECU 302 generates a result of determination indicating a battery malfunction as the cause. When it is determined that the temperature increase is not due to a battery malfunction (NO in S404), the process moves to S408. In S408, EHV-ECU 302 determines whether the temperature increase is due to a change in the external environment. When it is determined that the temperature increase is due to a change in the external environment (YES in S408), the process moves to S410. In S410, EHV-ECU 302 generates a result of determination indicating a change in the external environment as the cause. When it is determined that the temperature increase is not due to a change in the external environment (NO in S408), the process moves to S412. In S412, EHV-ECU 302 generates a result of determination indicating inability to make a determination. The generated result of determination is transmitted to DCM 312 in S312.

When such a process is executed, the magnitude of the temperature difference in battery temperature becomes smaller than or equal to the threshold value and EHV-ECU 302 and battery ECU 304 are intermittently activated at times t20 and t21, as shown in the timing chart of Fig. 4. When the magnitude of the temperature difference becomes greater than the threshold value at time t22, it is determined that there is an abnormality in the battery temperature (YES in S302). An activation request is transmitted to zone ECU 308 and DCM 312 at time t23 (S304), and zone ECU 308 and DCM 312 are activated at time t24 (S306). At time t25, zone ECU 308 and battery ECU 304 transmit sensor values to EHV-ECU 302 (S308). At time t26, EHV-ECU 302 executes a diagnosis process (S310). When the diagnosis process is executed, the received cell voltage, cell temperature, pack atmosphere temperature and outside air temperature are used (S400) to determine whether or not the various conditions are satisfied (S402). When the result of determination (A) is obtained according to the distinction table (I) (YES in S404), a result of determination indicating a battery malfunction as the cause is generated (S406). On the other hand, when the result of determination (B) or (C) is obtained (NO in S404 and YES in S406), a result of determination indicating a change in the external environment as the cause is generated (S410). At time t27, EHV-ECU 302 transmits a result of determination (a result of diagnosis) of the diagnosis process to DCM 312 (S312). DCM 312 transmits the received result of diagnosis to server 400 (S314).

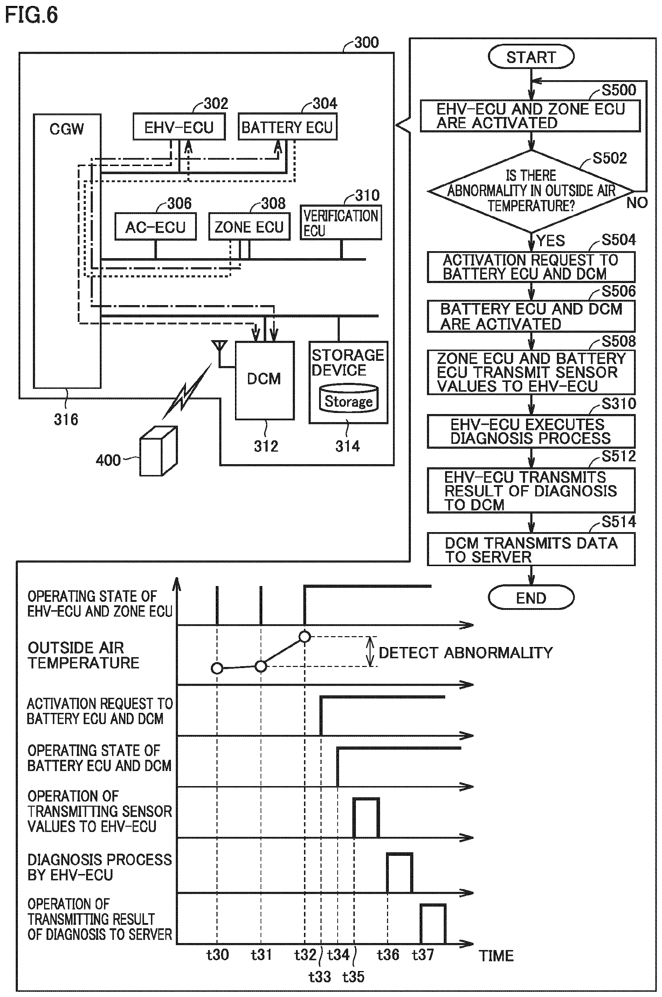

Fig. 6 is a diagram showing still yet another example of a configuration, process, and operation of control device 300 in a modification. Control device 300 in Fig. 6 is similar to control device 300 in Fig. 2 except for operation described below, and detailed description will not be repeated. When control device 300 executes the process shown in a flowchart of Fig. 6, the operation shown in a timing chart of Fig. 6 is performed.

In S500, EHV-ECU 302 and zone ECU 308 are activated. EHV-ECU 302 and zone ECU 308 are activated when a prescribed activation condition (the same condition as described above) is satisfied while the vehicle system is in a stop state. In S502, EHV-ECU 302 or zone ECU 308 determines whether or not there is an abnormality in the outside air temperature. The determination method is as described above, and detailed description will not be repeated. When it is determined that there is an abnormality in the outside air temperature (YES in S502), the process moves to S504. When it is determined that there is no abnormality in the outside air temperature (NO in S502), the process returns to S500. In S504, EHV-ECU 302 or zone ECU 308 transmits an activation request to battery ECU 304 and DCM 312. In S506, battery ECU 304 and DCM 312 are activated. In S508, battery ECU 304 and zone ECU 308 transmit sensor values to EHV-ECU 302. In S510, EHV-ECU 302 executes a diagnosis process. This diagnosis process is different from the process described in Fig. 5 in that a result of determination indicating the cause of the temperature abnormality is generated according to a distinction table (II) instead of the distinction table (I) in Fig. 5. The process is otherwise as described above, and detailed description will not be repeated.

The distinction table (II) in Fig. 5 shows: whether or not condition 1 is satisfied; whether or not condition 2 is satisfied; whether or not condition 3 is satisfied; and results of determination (A) to (F) obtained from combinations of these conditions. Details of conditions 1 to 3, as well as details of and satisfied conditions for the results of determination (A) to (D) are as described above, and detailed description will not be repeated. When condition 1 and condition 3 are satisfied, a result of determination (E) indicating an unknown cause is set. When only condition 3 is satisfied, a result of determination (F) indicating a change in the external environment as the cause is set.

In S512, EHV-ECU 302 transmits a result of diagnosis to DCM 312. In S514, DCM 312 transmits data on the result of diagnosis to server 400.

When such a process is executed, the magnitude of the difference between the current value and the previous value of the outside air temperature becomes smaller than or equal to the threshold value and EHV-ECU 302 and zone ECU 308 are intermittently activated at times t30 and t31, as shown in the timing chart of Fig. 6. When the magnitude of the difference becomes greater than the threshold value at time t32, it is determined that there is an abnormality in the outside air temperature (YES in S502). In this case, an activation request is transmitted to battery ECU 304 and DCM 312 at time t33 (S504), and battery ECU 304 and DCM 312 are activated at time t34 (S506). At time t35, zone ECU 308 and battery ECU 304 transmit sensor values to EHV-ECU 302 (S508). At time t36, EHV-ECU 302 executes a diagnosis process (S510). When the diagnosis process is executed, the received cell voltage, cell temperature, pack atmosphere temperature and outside air temperature are used (S400) to determine whether or not the various conditions are satisfied (S402). When the result of determination (A) is obtained according to the distinction table (II) (YES in S404), a result of determination indicating a battery malfunction as the cause is generated (S406). On the other hand, when the result of determination (B), (C) or (F) is obtained (NO in S404 and YES in S406), a result of determination indicating a change in the external environment as the cause is generated (S410). At time t37, EHV-ECU 302 transmits a result of determination (a result of diagnosis) of the diagnosis process to DCM 312 (S512). DCM 312 transmits the received result of diagnosis to server 400 (S514).

The modifications described above may be implemented in the form of being wholly or partially combined as appropriate.

### <Second Embodiment>

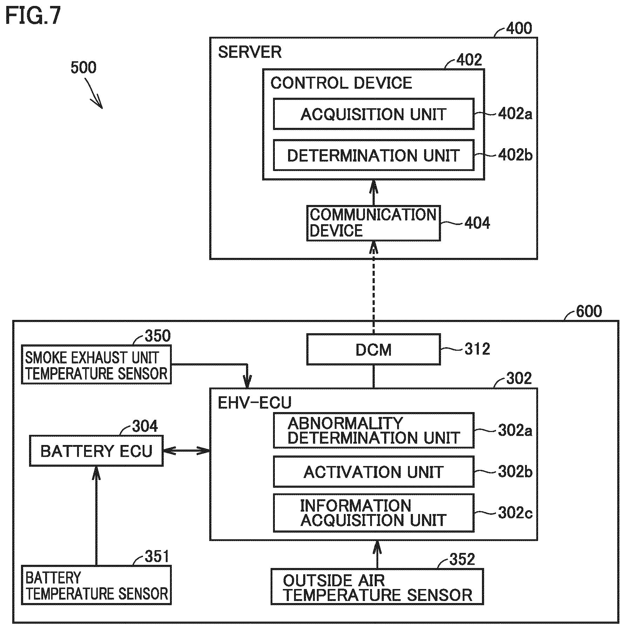

A configuration and operation of an abnormality determination system according to a second embodiment are described below. The abnormality determination system according to the present embodiment is configured, when the temperature of a battery pack mounted on a vehicle increases, to determine whether the temperature increase is due to an abnormality inside the battery pack or due to an abnormality (e.g., fire) outside the vehicle using a battery temperature sensor and an outside air temperature sensor. The configuration of the abnormality determination system according to the present embodiment is described below with reference to Fig. 7.

Fig. 7 is a diagram showing an example of a configuration of an abnormality determination system 500 according to the second embodiment. As shown in Fig. 7, abnormality determination system 500 includes a server 400 and a vehicle 600. Server 400 is communicably connected to each of a plurality of vehicles including vehicle 600. Identification information for identifying the plurality of vehicles is stored in advance, for example, in a storage device (not shown) of server 400, and identification information received from the plurality of vehicles is used to identify a communication target vehicle. Although Fig. 7 shows an example in which server 400 and vehicle 600 are communicably connected to each other, server 400 is also similarly communicably connected to the other vehicles, and detailed description thereof will not be repeated.

Server 400 includes a control device 402 and a communication device 404. Control device 402 includes an acquisition unit 402a and a determination unit 402b.

Acquisition unit 402a acquires, from vehicle 600, information about a history of results of detection by (a history of output values of) a battery temperature sensor 351 described later and a history of results of detection by (a history of output values of) an outside air temperature sensor 352 described later. Determination unit 402b identifies a location of an abnormality using the information acquired by acquisition unit 402a. A method for identifying the location of the abnormality will be described later.

Communication device 404 is configured to be capable of wirelessly communicating with a DCM 312 of vehicle 600. Since the method of communication between server 400 and DCM 312 is as described above in the first embodiment, detailed description thereof will not be repeated.

Vehicle 600 includes an EHV-ECU 302, a battery ECU 304, DCM 312, a smoke exhaust unit temperature sensor 350, battery temperature sensor 351, and outside air temperature sensor 352. EHV-ECU 302, battery ECU 304, and DCM 312 are configured in a similar manner to EHV-ECU 302, battery ECU 304, and DCM 312 described above in the first embodiment. Thus, detailed description thereof will not be repeated.

Smoke exhaust unit temperature sensor 350 is provided in a smoke exhaust unit of a battery pack 100, and detects a temperature of gas in the smoke exhaust unit and transmits a signal indicating a result of detection to EHV-ECU 302. The smoke exhaust unit is configured to direct gas out of battery pack 100 when the gas or the like is emitted from at least one of a plurality of battery cells in battery pack 100. Smoke exhaust unit temperature sensor 350 transmits a signal indicating a result of detection to EHV-ECU 302 upon each lapse of a predetermined amount of time, even while a system of vehicle 600 is in a stop state.

Battery temperature sensor 351 is provided at a predetermined position in battery pack 100, and detects a temperature of a battery cell at the predetermined position and transmits a result of detection to battery ECU 304. Battery temperature sensor 351 may transmit a result of detection to an ECU other than battery ECU 304, and the ECU other than battery ECU 304 may transmit the result of detection to battery ECU 304, or an ECU other than battery ECU 304 and EHV-ECU 302 may transmit the result of detection to EHV-ECU 302. Battery temperature sensor 351 corresponds to a "first detection device that detects a first parameter correlated with an internal temperature of a battery pack."

Outside air temperature sensor 352 is provided at a predetermined position of vehicle 600, and detects an atmosphere temperature at the predetermined position as an outside air temperature around vehicle 600 and transmits a result of detection to EHV-ECU 302. Outside air temperature sensor 352 may transmit a result of detection to an ECU other than EHV-ECU 302, and the ECU other than EHV-ECU 302 may transmit the result of detection to EHV-ECU 302. Outside air temperature sensor 352 corresponds to a "second detection device that detects a second parameter less correlated with the internal temperature than the first parameter and correlated with an external temperature of the battery pack." Instead of outside air temperature sensor 352, a sensor may be employed that is positioned farther away from battery pack 100 than at least battery temperature sensor 351 and that detects any one of the temperatures of vehicle 600.

EHV-ECU 302 includes an abnormality detection unit 302a, an activation unit 302b, and an information acquisition unit 302c.

Abnormality detection unit 302a determines whether or not an abnormality has occurred in vehicle 600 while the system of vehicle 600 is in a stop state. For example, when the temperature detected by smoke exhaust unit temperature sensor 350 has increased above a threshold value in an immediately preceding predetermined time period in vehicle 600 while the system is in a stop state, abnormality detection unit 302a determines that an abnormality has occurred in vehicle 600 while the system is in a stop state. When abnormality detection unit 302a determines that an abnormality has occurred, abnormality detection unit 302a may set an abnormality occurrence flag to an ON state, for example.

When abnormality detection unit 302a determines that an abnormality has occurred, activation unit 302b activates predetermined electrical devices. The predetermined electrical devices include devices for determining whether the abnormality has occurred inside or outside battery pack 100. The predetermined electrical devices include, for example, DCM 312, battery temperature sensor 351, and outside air temperature sensor 352. Activation unit 302b activates the predetermined electrical devices when, for example, the abnormality occurrence flag is in an ON state.

Information acquisition unit 302c acquires information about a history of results of detection by battery temperature sensor 351 and a history of results of detection by outside air temperature sensor 352. Information acquisition unit 302c acquires, for example, a history of output values of battery temperature sensor 351 and a history of output values of outside air temperature sensor 352 in the most recent predetermined time period from a time point when the abnormality was determined to have occurred. Information acquisition unit 302c transmits information about the acquired various histories to server 400 via DCM 312. The information about the various histories may include, for example, histories of output voltage values or histories of values converted into a temperature representation.

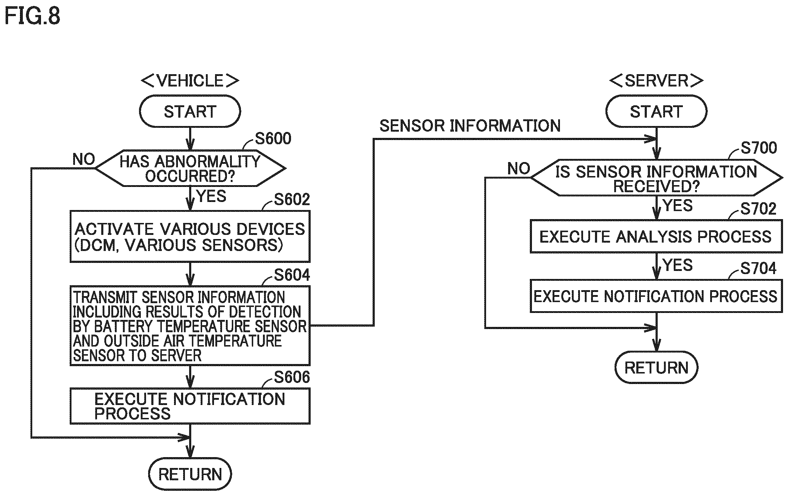

An example of operation of abnormality determination system 500 according to the present embodiment is described below with reference to Fig. 8. Fig. 8 is a flowchart illustrating an example of a process executed by each of vehicle 600 and server 400 in the second embodiment. The process shown in Fig. 8 is repeatedly executed at prescribed control intervals by each of vehicle 600 (specifically, a control device 300) and server 400 (specifically, control device 402). Details of the process executed by control device 300 of vehicle 600 are described below.

In S600, control device 300 determines whether or not an abnormality has occurred. Since the determination method is as described above, detailed description thereof will not be repeated. When it is determined that an abnormality has occurred (YES in S600), the process moves to S602.

In S602, control device 300 activates various devices (specifically, the predetermined electrical devices including DCM 312, battery temperature sensor 351, and outside air temperature sensor 352). Control device 300 activates the various devices by suppling electric power to DCM 312 and suppling electric power to ECUs connected to battery temperature sensor 351 and outside air temperature sensor 352, thereby enabling acquisition of sensor information and transmission to server 400. The process then moves to S604.

In S604, control device 300 acquires information about a history of results of detection by battery temperature sensor 351 and a history of results of detection by outside air temperature sensor 352 (hereinafter referred to as sensor information), and transmits the acquired sensor information to server 400. The process then moves to S606.

In S606, control device 300 executes a notification process. In the notification process, for example, character information or an image indicating the occurrence of the abnormality may be displayed on a display device (not shown) in vehicle 600. When it is determined that no abnormality has occurred (NO in S600), the process ends. Next, details of the process executed by control device 402 of server 400 are described.

In S700, control device 402 determines whether or not the sensor information is received from vehicle 600. When it is determined that the sensor information is received (YES in S700), the process moves to S702.

In S702, control device 402 executes an analysis process of analyzing the sensor information. For example, control device 402 determines whether the abnormality has occurred inside battery pack 100 or outside vehicle 600 using the sensor information.

For example, when a predetermined change occurs in the output value of battery temperature sensor 351 before in the output value of outside air temperature sensor 352, control device 402 determines that the abnormality has occurred inside battery pack 100. For example, when the predetermined change occurs in the output value of outside air temperature sensor 352 before in the output value of battery temperature sensor 351, control device 402 determines that the abnormality has occurred outside vehicle 600. The predetermined change includes, for example, a change in which the amount of change per unit time exceeds a threshold value. The threshold value is set in advance for each sensor, for example.

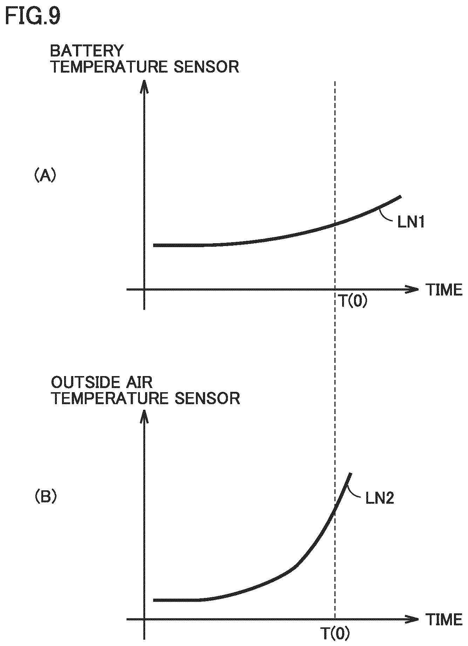

Fig. 9 is a diagram showing an example of histories of results of detection by battery temperature sensor 351 and outside air temperature sensor 352. The vertical axes in Fig. 9 represent output values of battery temperature sensor 351 and outside air temperature sensor 352, respectively. Each horizontal axis in Fig. 9 represents time.

Fig. 9 (A) shows a relationship between the output value of battery temperature sensor 351 and time, where LN1 in Fig. 9 indicates an example of a temporal change in the output value of battery temperature sensor 351. Fig. 9 (B) shows a relationship between the output value of outside air temperature sensor 352 and time, where LN2 in Fig. 9 indicates an example of a temporal change in the output value of outside air temperature sensor 352.

Control device 402 calculates, for example, a first amount of change per unit time in the output value of battery temperature sensor 351, and a second amount of change per unit time in the output value of outside air temperature sensor 352.

For example, when the second amount of change exceeds a threshold value and the first amount of change does not exceed the threshold value at time T(0) as indicated by LN1 and LN2 in Fig. 9, control device 402 determines that the abnormality has occurred outside vehicle 600 because the predetermined change has occurred in the output value of outside air temperature sensor 352 before in the output value of battery temperature sensor 351.

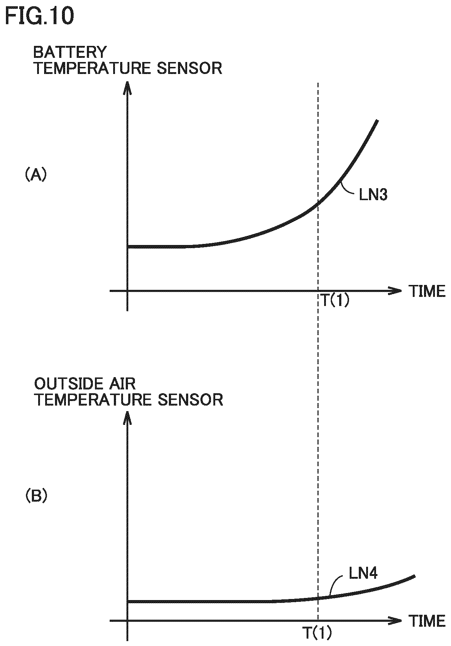

Fig. 10 is a diagram showing another example of histories of results of detection by battery temperature sensor 351 and outside air temperature sensor 352. The vertical axes in Fig. 10 represent an output value of battery temperature sensor 351 and an output value of outside air temperature sensor 352, respectively. Each horizontal axis in Fig. 10 represents time. Fig. 10 (A) shows a relationship between the output value of battery temperature sensor 351 and time. Thus, LN3 in Fig. 10 indicates an example of a temporal change in the output value of battery temperature sensor 351. Fig. 10 (B) shows a relationship between the output value of outside air temperature sensor 352 and time. Thus, LN4 in Fig. 10 indicates an example of a temporal change in the output value of outside air temperature sensor 352.

For example, when the first amount of change exceeds a threshold value and the second amount of change does not exceed the threshold value at time T(1) as indicated by LN3 and LN4 in Fig. 10, control device 402 determines that the abnormality has occurred inside battery pack 100 because the predetermined change has occurred in the output value of battery temperature sensor 351 before in the output value of outside air temperature sensor 352. The process then moves to S704.

In S704, control device 402 executes a notification process. For example, control device 402 transmits information about the occurrence and the location of the abnormality to a terminal of a user of vehicle 600. For example, control device 402 may read, from the storage device, information about the terminal of the user associated with the identification information of vehicle 600, and use the read information to transmit the information about the occurrence and the location of the abnormality to the terminal of the user. Alternatively, for example, control device 402 may transmit the information about the occurrence and the location of the abnormality to vehicle 600, or may cause an interface such as a display device of server 400 to display the information. The process then ends. When it is determined that the sensor information is not received (NO in S700), the process ends.

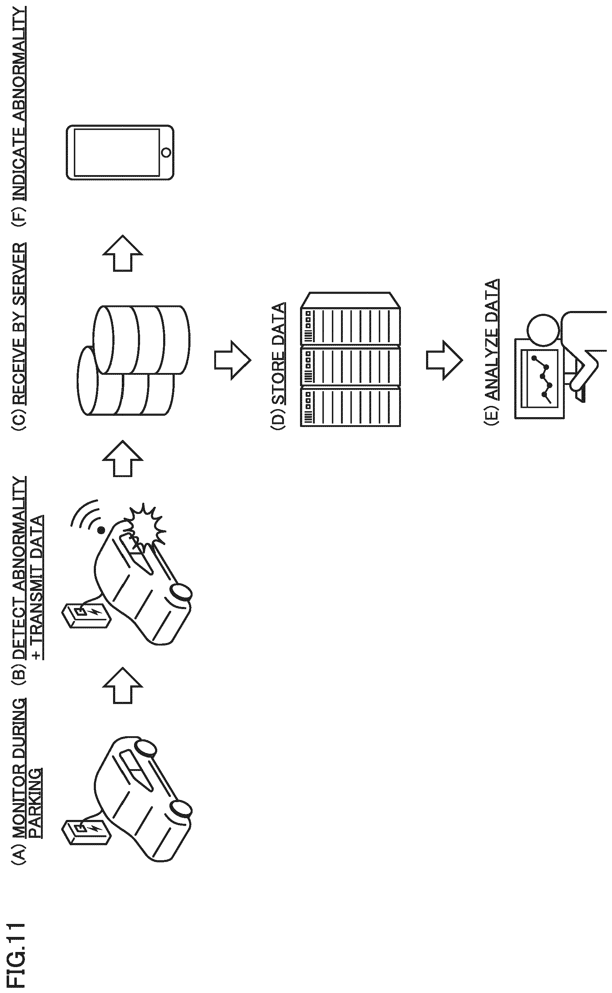

The operation of abnormality determination system 500 according to the present embodiment based on the above-described structure and flowchart is described with reference to Fig. 11. Fig. 11 is a diagram for illustrating the operation of abnormality determination system 500 according to the second embodiment.

As shown in Fig. 11 (A), let us assume that vehicle 600 is parked in a parking space, for example. At this time, battery pack 100 mounted on vehicle 600 is charged by connection of a connector of a charging station to vehicle 600. While vehicle 600 is parked, it is determined whether or not an abnormality has occurred using the result of detection by smoke exhaust unit temperature sensor 350 (S600). When it is determined that no abnormality has occurred (NO in S600), it is determined whether or not an abnormality has occurred upon each lapse of a predetermined amount of time (S600).

As shown in Fig. 11 (B), for example, when an abnormality (e.g., fire) occurs on the left rear side outside vehicle 600, the temperature of gas in the smoke exhaust unit within battery pack 100 increases due to generated heat, and therefore, the temperature detected by smoke exhaust unit temperature sensor 350 also increases. Then, when the detected temperature exceeds a threshold value, it is determined that an abnormality has occurred (YES in S600).

When it is determined that an abnormality has occurred, the predetermined electrical devices are activated (S602) to acquire the history of output values of battery temperature sensor 351 and the history of output values of outside air temperature sensor 352, and the sensor information about the acquired various histories is transmitted to server 400 (S604). In vehicle 600, character information indicating the occurrence of the abnormality is displayed (S606).

When the sensor information is received by server 400 (YES in S700) as shown in Fig. 11 (C), the received sensor information is stored in the storage device of server 400 as shown in Fig. 11 (D). As shown in Fig. 11 (E), the stored sensor information is subjected to an analysis process and used to identify a location of the abnormality (S702).

For example, when the location of the abnormality is identified, the location is displayed on the display device in server 400, or, as shown in Fig. 11 (F), information about the location of the abnormality is transmitted to the terminal of the user of vehicle 600 (S704).

As described above, in abnormality determination system 500 according to the present embodiment, when it is determined that an abnormality has occurred in vehicle 600 using the result of detection by smoke exhaust unit temperature sensor 350, the history of results of detection by battery temperature sensor 351 and the history of results of detection by outside air temperature sensor 352 are transmitted to server 400. It is thus possible for server 400 to determine with high accuracy whether the abnormality that has occurred in vehicle 600 has occurred inside battery pack 100 or outside vehicle 600. Therefore, there can be provided an abnormality determination system, an abnormality determination method, a vehicle, and a server capable of determining a cause of a temperature increase with high accuracy.

Modifications are described below.

The above embodiment has described control device 300 as executing, after transmitting the sensor information to server 400, the notification process of causing the display device to display character information or an image indicating the occurrence of the abnormality, however, for example, control device 300 may acquire information about the location of the abnormality from server 400 and cause the display device to display character information or an image indicating the acquired location, or control device 300 may identify the location of the abnormality using the sensor information and cause the display device to display character information or an image indicating the identified location.

Further, the above embodiment has described an example in which the history of results of detection by each of battery temperature sensor 351 and outside air temperature sensor 352 provided at the predetermined positions in battery pack 100 is transmitted to server 400 in order to determine whether the abnormality has occurred inside battery pack 100 or outside vehicle 600, however, for example, instead of the history of results of detection by battery temperature sensor 351, a history of results of detection by any one of battery temperature sensors provided at a plurality of locations in battery pack 100 may be transmitted to server 400, or a history of average values of temperatures at respective positions detected by battery temperature sensors provided at a plurality of locations may be transmitted to server 400.

Further, the above embodiment has described an example in which it is determined whether or not an abnormality has occurred using the result of detection by smoke exhaust unit temperature sensor 350, however, any sensor may be used that detects the temperature of a detection target which increases in temperature both when an abnormality occurs inside battery pack 100 and when an abnormality occurs outside vehicle 600, which is not particularly limited to smoke exhaust unit temperature sensor 350. For example, instead of smoke exhaust unit temperature sensor 350, battery temperature sensor 351 or outside air temperature sensor 352 may be used.

Further, the above embodiment has described an example in which battery temperature sensor 351 is used to detect the internal temperature of battery pack 100, however, the manner of detection is not particularly limited to the use of battery temperature sensor 351, as long as a parameter correlated with the internal temperature of battery pack 100 can be detected. For example, instead of battery temperature sensor 351, a sensor that detects the temperature or the atmosphere temperature of a component other than the cell, such as the housing of battery pack 100, may be used.

Further, the above embodiment has described server 400 as determining whether the abnormality has occurred inside battery pack 100 or outside vehicle 600, however, any one of the ECUs in control device 300 of vehicle 600 may make the determination.

The modifications described above may be implemented in the form of being wholly or partially combined as appropriate.

### <Third Embodiment>

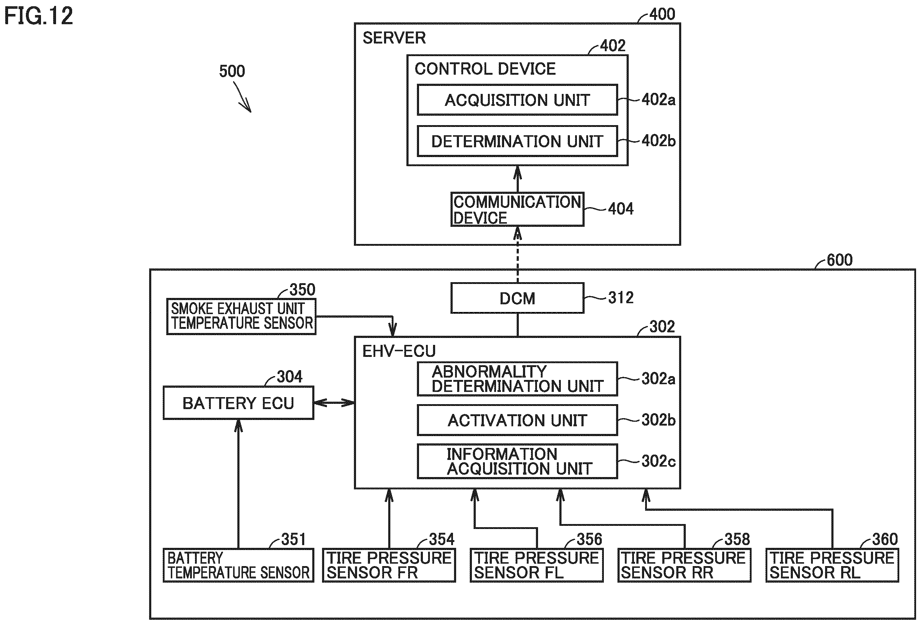

A configuration and operation of an abnormality determination system according to a third embodiment are described below. The above second embodiment has described an example in which outside air temperature sensor 352 is used to detect the external temperature of battery pack 100, however, the present embodiment describes an example in which a tire pressure sensor that detects the pressure of a tire of vehicle 600 as a parameter correlated with the external temperature of battery pack 100 is used instead of outside air temperature sensor 352. That is, the abnormality determination system according to the present embodiment is configured, when the temperature of a battery pack mounted on a vehicle increases, to determine whether the temperature increase is due to an abnormality inside the battery pack or due to an abnormality (e.g., fire) outside the vehicle using a battery temperature sensor and a tire pressure sensor. The configuration of the abnormality determination system according to the present embodiment is described below with reference to Fig. 12.

Fig. 12 is a diagram showing an example of a configuration of an abnormality determination system 500 according to the third embodiment. As shown in Fig. 12, abnormality determination system 500 includes a server 400 and a vehicle 600.

Server 400 includes a control device 402 and a communication device 404. Control device 402 includes an acquisition unit 402a and a determination unit 402b.

Acquisition unit 402a acquires, from vehicle 600, information about a history of results of detection by (a history of output values of) a battery temperature sensor 351 described later and a history of results of detection by (a history of output values of) each of a tire pressure sensor FR 354, a tire pressure sensor FL 356, a tire pressure sensor RR 358, and a tire pressure sensor RL 360 described later. Determination unit 402b identifies a location of an abnormality using the information acquired by acquisition unit 402a. A method for identifying the location of the abnormality will be described later.

Vehicle 600 is different from vehicle 600 in the above second embodiment in that it includes tire pressure sensor FR 354, tire pressure sensor FL 356, tire pressure sensor RR 358, and tire pressure sensor RL 360, instead of outside air temperature sensor 352. The configuration and operation are otherwise similar to those of vehicle 600 in the above second embodiment, except for what is described below. Therefore, detailed description thereof will not be repeated.

Tire pressure sensor FR 354, tire pressure sensor FL 356, tire pressure sensor RR 358, and tire pressure sensor RL 360 are connected to an EHV-ECU 302 of vehicle 600. Tire pressure sensor FR 354, tire pressure sensor FL 356, tire pressure sensor RR 358, and tire pressure sensor RL 360 may be hereinafter collectively referred to as "tire pressure sensors."

Tire pressure sensor FR 354 is provided in a right front wheel of vehicle 600, and detects an air pressure of a tire (hereinafter referred to as a tire pressure) of the right front wheel and transmits a result of detection to EHV-ECU 302. Tire pressure sensor FL 356 is provided in a left front wheel of vehicle 600, and detects a tire pressure of the left front wheel and transmits a result of detection to EHV-ECU 302. Tire pressure sensor RR 358 is provided in a right rear wheel of vehicle 600, and detects a tire pressure of the right rear wheel and transmits a result of detection to EHV-ECU 302. Tire pressure sensor RL 360 is provided in a left rear wheel of vehicle 600, and detects a tire pressure of the left rear wheel and transmits a result of detection to EHV-ECU 302. Each tire pressure sensor may transmit a result of detection to an ECU other than EHV-ECU 302, and the ECU that receives the result of detection may transmit the result of detection by each tire pressure sensor to EHV-ECU 302. The tire pressure sensors correspond to a "second detection device."

EHV-ECU 302 includes an abnormality detection unit 302a, an activation unit 302b, and an information acquisition unit 302c. Abnormality detection unit 302a is configured in a similar manner to abnormality detection unit 302a in Fig. 7 in the second embodiment. Therefore, detailed description thereof will not be repeated.

When abnormality detection unit 302a determines that an abnormality has occurred, activation unit 302b activates predetermined electrical devices. The predetermined electrical devices include, for example, a DCM 312, battery temperature sensor 351, and the tire pressure sensors.

Information acquisition unit 302c acquires information about a history of results of detection by battery temperature sensor 351 and histories of results of detection by the tire pressure sensors. Information acquisition unit 302c acquires, for example, a history of output values of battery temperature sensor 351 and histories of output values of the tire pressure sensors in the most recent predetermined time period from a time point when the abnormality was determined to have occurred. Information acquisition unit 302c transmits information about the acquired various histories to server 400 via DCM 312. The information about the various histories may include, for example, histories of output voltage values or histories of values converted into a temperature or voltage representation.

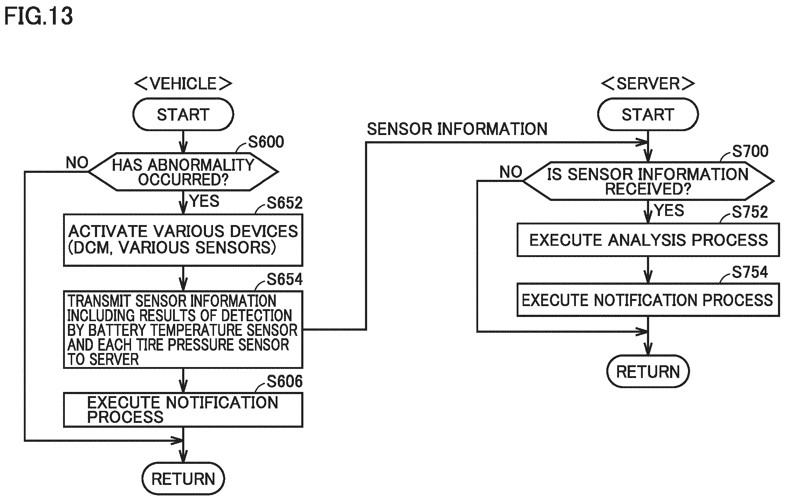

An example of operation of abnormality determination system 500 according to the present embodiment is described below with reference to Fig. 13. Fig. 13 is a flowchart illustrating an example of a process executed by each of vehicle 600 and server 400 in the third embodiment. The process shown in Fig. 13 is repeatedly executed at prescribed control intervals by each of vehicle 600 (specifically, a control device 300) and server 400 (specifically, control device 402). In the process of the flowchart shown in Fig. 13, the same process steps as those in Fig. 8 are designated by the same step numbers, and details of the process steps are the same, except for what is described below. Therefore, detailed description thereof will not be provided.

Details of the process executed by control device 300 of vehicle 600 are described below. When it is determined that an abnormality has occurred (YES in S600), the process moves to S652.

In S652, control device 300 activates various devices (specifically, the predetermined electrical devices including DCM 312, battery temperature sensor 351, and the tire pressure sensors). Control device 300 activates the various devices by suppling electric power to DCM 312 and suppling electric power to ECUs connected to battery temperature sensor 351 and the tire pressure sensors, thereby enabling acquisition of sensor information and transmission to server 400. The process then moves to S654.

In S654, control device 300 acquires information about a history of results of detection by battery temperature sensor 351 and histories of results of detection by the tire pressure sensors (hereinafter referred to as sensor information), and transmits the acquired sensor information to server 400. The process then moves to S606.

Next, details of the process executed by control device 402 of server 400 are described. When it is determined that the sensor information is received (YES in S700), the process moves to S752.

In S752, control device 402 executes an analysis process of analyzing the sensor information. For example, control device 402 determines whether the abnormality has occurred inside battery pack 100 or outside vehicle 600 using the sensor information.

For example, when a predetermined change occurs in the output value of battery temperature sensor 351 before in the output value of a tire pressure sensor, control device 402 determines that the abnormality has occurred inside battery pack 100. For example, when the predetermined change occurs in the output value of at least one of tire pressure sensor FR 354, tire pressure sensor FL 356, tire pressure sensor RR 358, and tire pressure sensor RL 360 before in the output value of battery temperature sensor 351, control device 402 determines that the abnormality has occurred outside vehicle 600. The predetermined change includes, for example, a change in which a magnitude of the amount of change per unit time exceeds a threshold value. The threshold value is set in advance for each sensor, for example.

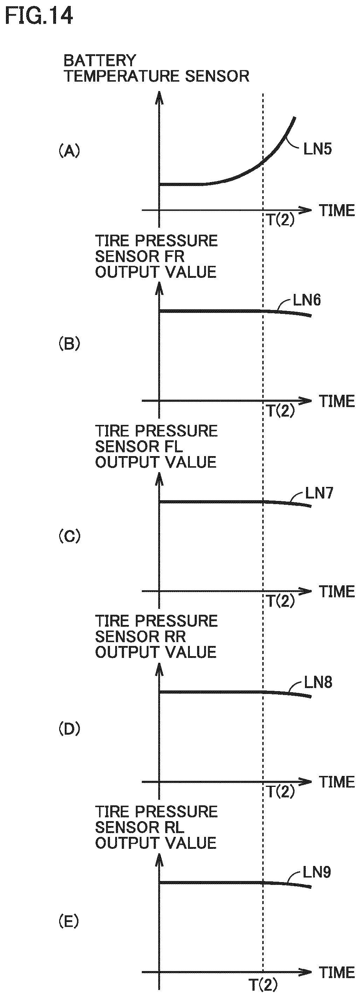

Fig. 14 is a diagram showing an example of histories of results of detection by battery temperature sensor 351 and the tire pressure sensors. The vertical axes in Fig. 14 represent output values of battery temperature sensor 351, tire pressure sensor FR 354, tire pressure sensor FL 356, tire pressure sensor RR 358, and tire pressure sensor RL 360, respectively. Each horizontal axis in Fig. 14 represents time.

Fig. 14 (A) shows a relationship between the output value of battery temperature sensor 351 and time, where LN5 in Fig. 14 indicates an example of a temporal change in the output value of battery temperature sensor 351. Fig. 14 (B) shows a relationship between the output value of tire pressure sensor FR 354 and time, where LN6 in Fig. 14 indicates an example of a temporal change in the output value of tire pressure sensor FR 354. Fig. 14 (C) shows a relationship between the output value of tire pressure sensor FL 356 and time, where LN7 in Fig. 14 indicates an example of a temporal change in the output value of tire pressure sensor FL 356. Fig. 14 (D) shows a relationship between the output value of tire pressure sensor RR 358 and time, where LN8 in Fig. 14 indicates an example of a temporal change in the output value of tire pressure sensor RR 358. Fig. 14 (E) shows a relationship between the output value of tire pressure sensor RL 360 and time, where LN9 in Fig. 14 indicates an example of a temporal change in the pressure output value of tire pressure sensor RL 360.

Control device 402 calculates, for example: an amount of change in temperature per unit time in the output value of battery temperature sensor 351; a first amount of change per unit time in the output value of tire pressure sensor FR 354; a second amount of change per unit time in the output value of tire pressure sensor FL 356; a third amount of change per unit time in the output value of tire pressure sensor RR 358; and a fourth amount of change per unit time in the output value of tire pressure sensor RL 360.

For example, when the magnitude of the amount of change in temperature exceeds a threshold value and none of the magnitudes of first amount of change, the second amount of change, the third amount of change and the fourth amount of change exceeds the threshold value at time T(2) as indicated by LN5 to LN9 in Fig. 14, control device 402 determines that the abnormality has occurred inside battery pack 100 because the predetermined change has occurred in the output value of battery temperature sensor 351 before in the output values of the tire pressure sensors.

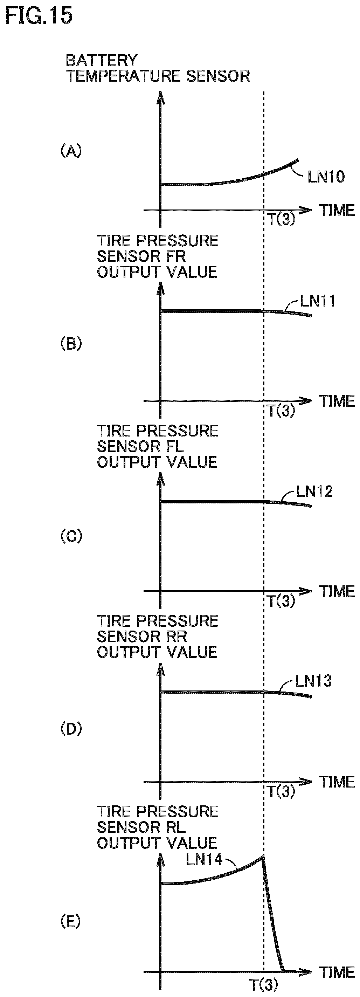

Fig. 15 is a diagram showing another example of histories of results of detection by battery temperature sensor 351 and the tire pressure sensors. Since the vertical axes in Fig. 15 are similar to those in Fig. 14, detailed description thereof will not be repeated. Each horizontal axis in Fig. 15 represents time.

Fig. 15 (A) shows a relationship between the output value of battery temperature sensor 351 and time, where LN10 in Fig. 15 indicates an example of a temporal change in the output value of battery temperature sensor 351. Fig. 15 (B) shows a relationship between the output value of tire pressure sensor FR 354 and time, where LN11 in Fig. 15 indicates an example of a temporal change in the output value of tire pressure sensor FR 354. Fig. 15 (C) shows a relationship between the output value of tire pressure sensor FL 356 and time, where LN12 in Fig. 15 indicates an example of a temporal change in the output value of tire pressure sensor FL 356. Fig. 15 (D) shows a relationship between the output value of tire pressure sensor RR 358 and time, where LN13 in Fig. 15 indicates an example of a temporal change in the output value of tire pressure sensor RR 358. Fig. 15 (E) shows a relationship between the output value of tire pressure sensor RL 360 and time, where LN14 in Fig. 15 indicates an example of a temporal change in the output value of tire pressure sensor RL 360.

For example, when the magnitude of the fourth amount of change exceeds a threshold value and none of the magnitudes of the amount of change in temperature and the first amount of change to the third amount of change exceeds the threshold value at time T(3) as indicated by LN10 to LN14 in Fig. 15, control device 402 determines that the abnormality has occurred in the left rear wheel outside vehicle 600 because the predetermined change has occurred in the output value of the tire pressure sensor (particularly, tire pressure sensor RL 360) before in the output value of battery temperature sensor 351. The process then moves to S754.

In S754, control device 402 executes a notification process. For example, control device 402 transmits information about the occurrence and the location of the abnormality to a terminal of a user of vehicle 600. The information about the location includes, in addition to the information about whether the abnormality is inside battery pack 100 or outside vehicle 600, information about which of the four wheels of vehicle 600 is having the abnormality. For example, control device 402 may read, from the storage device, information about the terminal of the user associated with the identification information of vehicle 600, and use the read information to transmit the information about the occurrence and the location of the abnormality to the terminal of the user. Alternatively, for example, control device 402 may transmit the information about the occurrence and the location of the abnormality to vehicle 600, or may cause an interface such as a display device of server 400 to display the information.

The operation of abnormality determination system 500 according to the present embodiment based on the above-described structure and flowchart is described.

Let us assume that vehicle 600 is parked in a parking space, for example. At this time, battery pack 100 mounted on vehicle 600 is charged by connection of a connector of a charging station to vehicle 600. While vehicle 600 is parked, it is determined whether or not an abnormality has occurred using the result of detection by smoke exhaust unit temperature sensor 350 (S600). When it is determined that no abnormality has occurred (NO in S600), it is determined whether or not an abnormality has occurred upon each lapse of a predetermined amount of time (S600).

For example, when an abnormality occurs due to fire or the like on the left rear side outside vehicle 600, the temperature detected by the temperature sensor provided in a smoke exhaust port also increases. Then, when the detected temperature exceeds a threshold value, it is determined that an abnormality has occurred (YES in S600).

When it is determined that an abnormality has occurred, DCM 312, and the ECUs connected to battery temperature sensor 351, tire pressure sensor FR 354, tire pressure sensor FL 356, tire pressure sensor RR 358, and tire pressure sensor RL 360 are activated (S652). Then, the sensor information including the history of output values of battery temperature sensor 351 and the histories of output values of tire pressure sensor FR 354, tire pressure sensor FL 356, tire pressure sensor RR 358, and tire pressure sensor RL 360 is transmitted to server 400 (S654). In vehicle 600, character information indicating the occurrence of the abnormality is displayed (S606).

When the sensor information is received in server 400 (YES in S700), the received sensor information is stored in the storage device of server 400. The stored sensor information is subjected to an analysis process and used to identify a location of the abnormality (S752).

For example, when the predetermined change occurs in the output value of tire pressure sensor RL 360 before in the output value of battery temperature sensor 351, it is determined that the abnormality has occurred on the left rear wheel side outside vehicle 600.

For example, when the location of the abnormality is identified, the location is displayed on the display device in server 400, or information about the location of the abnormality (the left rear wheel side outside vehicle 600) is transmitted to the terminal of the user of vehicle 600 (S754).

As described above, in abnormality determination system 500 according to the present embodiment, when it is determined that an abnormality has occurred in vehicle 600 using the result of detection by smoke exhaust unit temperature sensor 350, the history of results of detection by battery temperature sensor 351 and the histories of results of detection by the tire pressure sensors are transmitted to server 400. It is thus possible for server 400 to determine with high accuracy whether the abnormality that has occurred in vehicle 600 has occurred inside the battery or outside vehicle 600, and which of the wheels is having the abnormality. Therefore, there can be provided an abnormality determination system, an abnormality determination method, a vehicle, and a server capable of determining a cause of a temperature increase with high accuracy.

The present embodiment has described an example in which, when the predetermined change occurs in any one of the tire pressure sensors, the location of the abnormality is identified based on the position of the tire pressure sensor in which the change has occurred, however, for example, when the predetermined change occurs in any two of the four sensors constituting the tire pressure sensors, a plurality of locations of the abnormality may be identified based on the positions of the sensors. Alternatively, when the predetermined change occurs in two sensors for the front wheels of vehicle 600, a front portion of vehicle 600 may be identified as the location of the abnormality; when the predetermined change occurs in two sensors for the rear wheels of vehicle 600, a rear portion of vehicle 600 may be identified as the location of the abnormality; when the predetermined change occurs in two sensors for the right wheels of vehicle 600, a right side portion of vehicle 600 may be identified as the location of the abnormality; and when the predetermined change occurs in two sensors for the left wheels of vehicle 600, a left side portion of vehicle 600 may be identified as the location of the abnormality.

Modifications are similar to those in the second embodiment. Therefore, detailed description thereof will not be repeated. The modifications may be implemented in the form of being wholly or partially combined as appropriate.

Although the embodiments of the present disclosure have been described, it should be understood that the embodiments disclosed herein are illustrative and non-restrictive in every respect. The scope of the present disclosure is defined by the terms of the claims, and is intended to include any modifications within the scope and meaning equivalent to the terms of the claims.

## Claims

1. A battery system comprising:
a battery cell (152, 154, 156, 158, 160, 162, 164);
a housing (101) that houses the battery cell (152, 154, 156, 158, 160, 162, 164) and that is mounted on a vehicle;
a first detection device (102, 104, 106, 108, 110, 112) that detects a first temperature indicating a temperature of the housing (101);
a second detection device (114, 116, 118, 120) that detects a second temperature indicating a temperature in the housing; and
a first control device (304) that compares a result of detection by the first detection device (102, 104, 106, 108, 110, 112) with a result of detection by the second detection device (114, 116, 118, 120) to determine whether a temperature increase in the battery cell (152, 154, 156, 158, 160, 162, 164) is due to a change in an external environment of the housing (101) or due to a malfunction in the battery cell (152, 154, 156, 158, 160, 162, 164).

2. The battery system according to claim 1, wherein
when a first rate of increase in the first temperature is higher than a second rate of increase in the second temperature, the first control device (304) determines that the temperature increase is due to a change in the external environment, and when the second rate of increase is higher than the first rate of increase, the first control device (304) determines that the temperature increase is due to a malfunction in the battery cell (152, 154, 156, 158, 160, 162, 164).

3. The battery system according to claim 1, further comprising a second control device (308) capable of communicating with a server (400) external to the vehicle, wherein
the first control device (304) activates the second control device (308) to transmit, to the server (400), information from which a result of determination can be acquired.

4. The battery system according to claim 1, wherein
the first detection device (102, 104, 106, 108, 110, 112) is provided at a position other than on a path along which gas is discharged out of the housing (101) from the battery cell (152, 154, 156, 158, 160, 162, 164) upon generation of the gas in the battery cell (152, 154, 156, 158, 160, 162, 164).

5. The battery system according to claim 1, wherein
a plurality of battery cells (152, 154, 156, 158, 160, 162, 164) are housed in the housing (101),
an insulating plate (155, 157, 159, 161) that provides insulation between the battery cells (152, 154, 156, 158, 160, 162, 164) is provided between the battery cells (152, 154, 156, 158, 160, 162, 164), and
the first detection device (102, 104, 106, 108, 110, 112) is provided in a lower portion of the insulating plate (155, 157, 159, 161).

6. An abnormality determination system comprising:
a battery pack (100);
a first detection device (351) that detects a first parameter correlated with an internal temperature of the battery pack (100);
a second detection device (352, 354, 356, 358, 360) that detects a second parameter less correlated with the internal temperature than the first parameter and correlated with an external temperature of the battery pack (100); and
a control device (402) that determines whether an abnormality has occurred inside or outside the battery pack (100) using the first parameter and the second parameter.

7. The abnormality determination system according to claim 6, wherein
when a predetermined change occurs in the second parameter before in the first parameter, the control device (402) determines that the abnormality has occurred outside the battery pack (100).

8. The abnormality determination system according to claim 6, wherein
when a predetermined change occurs in the first parameter before in the second parameter, the control device (402) determines that the abnormality has occurred inside the battery pack (100).

9. The abnormality determination system according to claim 7 or 8, wherein
the predetermined change includes a change greater than or equal to a predetermined value in a predetermined time period.

10. The abnormality determination system according to claim 6, wherein
the second detection device (354, 356, 358, 360) includes a plurality of detection targets, and
when a predetermined change occurs in at least one detection target of the plurality of detection targets before in the other detection targets, the control device (402) identifies a location of the abnormality outside the battery pack (100) using a position corresponding to the at least one detection target.

11. The abnormality determination system according to claim 6, wherein
the first detection device (351) and the second detection device (352) are mounted on a vehicle (600),
the control device (402) is provided in a server (400) capable of communicating with the vehicle,
the first detection device (351) detects the internal temperature as the first parameter,
the second detection device (352) detects an outside air temperature as the second parameter, and
when an abnormality occurs in the vehicle (600), the vehicle (600) transmits information about the first parameter and the second parameter to the server (400).

12. The abnormality determination system according to claim 6, wherein
the first detection device (351) and the second detection device (354, 356, 358, 360) are mounted on a vehicle (600),
the control device (402) is provided in a server (400) capable of communicating with the vehicle (600),
the first detection device (351) detects the internal temperature as the first parameter,
the second detection device (354, 356, 358, 360) detects a pressure in a tire of the vehicle (600) as the second parameter, and
when an abnormality occurs in the vehicle (600), the vehicle (600) transmits information about the first parameter and the second parameter to the server (400).

13. An abnormality determination system that determines whether an abnormality has occurred inside or outside a battery pack (100) using a first parameter correlated with an internal temperature of the battery pack (100), and a second parameter less correlated with the internal temperature than the first parameter and correlated with an external temperature of the battery pack (100).

14. A vehicle comprising:
a battery pack (100);
an acquisition device (351, 352, 354, 356, 358, 360) that acquires an internal temperature and an external temperature of the battery pack (100); and
a control device (300) that transmits, to a server (400), information including a first parameter correlated with the internal temperature, and a second parameter less correlated with the internal temperature than the first parameter and correlated with the external temperature.

15. An abnormality determination method for determining an abnormality in a battery pack (100), the abnormality determination method comprising:
detecting a first parameter correlated with an internal temperature of the battery pack (100);
detecting a second parameter less correlated with the internal temperature than the first parameter and correlated with an external temperature of the battery pack (100); and
determining whether an abnormality has occurred inside or outside the battery pack (100) using the first parameter and the second parameter.

16. A server comprising:
an acquisition device (404) that acquires, from a vehicle (600) having a battery pack (100) mounted thereon, information including a first parameter correlated with an internal temperature of the battery pack (100), and a second parameter less correlated with the internal temperature than the first parameter and correlated with an external temperature of the battery pack (100); and
a control device (402) that determines whether an abnormality has occurred inside the battery pack (100) or outside the vehicle (600) using the acquired first parameter and the acquired second parameter.
